# EUROPÄISCHE PATENTSCHRIFT

(11) **EP 0 865 031 B1**
(45) Veröffentlichungstag und Bekanntmachung des Hinweises auf die Patenterteilung: **18.06.2003**
(21) Anmeldenummer: 98200694.2
(22) Anmeldetag: 04.03.1998
(51) Int. Cl.: G10L 15/22

(54) **System zur Spracherkennung von Ziffern**
System for speech recognition of digits
Système pour la reconnaissance de parole de chiffres

(30) Priorität: 11.03.1997 DE 19709990
(43) Veröffentlichungstag der Anmeldung: 16.09.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Gamm, Stephan, Dipl.-Ing., Röntgenstrasse 24, 22335 Hamburg (DE); Lenke, Nils, Dr., Röntgenstrasse 24, 22335 Hamburg (DE); Ockel, Jörg, Dipl.-Ing., Röntgenstrasse 24, 22335 Hamburg (DE)
(74) Vertreter: Volmer, Georg, Dipl.-Ing.

(56) Entgegenhaltungen:
- WO-A-89/04035
- DE-A- 3 519 972

## Beschreibung

Die Erfindung bezieht sich auf ein System zur Spracherkennung von Ziffern mit einer Steueranordnung zur Erkennung von wenigstens einer Ziffernfolge und zur Ausgabe der erkannten Ziffern wenigstens einer Ziffernfolge.

Ein solches System ist beispielsweise aus der WO 95/06309 A1 bekannt und enthält eine Fernbedienung mit einem Mikrofon und eine Schaltung zur Bildung eines modulierten Infrarotsignals. Die von dem Mikrofon aufgenommenen Spracheingaben eines Benutzers werden mittels Infrarotsignal zu einer Steuervorrichtung übertragen, welche die Spracheingaben in Codeworte umsetzt und einer Auswerteschaltung zur Bildung von Steuerbefehlen, z.B. für einen Videorecorder oder Fernsehgerät umsetzt. Mit Hilfe einzelner Spracheingaben oder -kommandos können bestimmte Funktionen im Fernsehgerät oder Videorecorder durchgeführt werden. Beispielsweise kann ein Kanal gewählt, die Lautstärke eingestellt oder auch die Wiedergabe eines Videobandes gestoppt werden. Es ist auch eine Zeitprogrammierung für den Videorecorder beschrieben, bei dem durch Eingabe von Kanal, Datum, Startzeit und Ende eine Programmierung in einer fest vorgegebenen Reihenfolge vorgesehen ist. Bei der Spracheingabe ist die Eingabe von Ziffern erforderlich. Nach der Eingabe von Ziffern, beispielsweise für einen Kanal oder eine Uhrzeit werden daraus Ausgaben gebildet, um eine entsprechende Steuerung des Videogerätes oder Fernsehgerätes vorzunehmen. Hierbei findet ein Vergleich mit abgespeicherten Mustern statt. Falls eine Ziffer falsch erkannt und einem falschen Muster zugeordnet worden ist, wird eine fehlerhafte Steuerung vollzogen.

Weiterhin ist aus der Patentschrift WO-A-89/04035 ein automatisches Spracherkennungssystem bekannt, das Bestandteil eines Telefons ist. Die Eingabe von Telefonnummern erfolgt dabei mittels Spracheingabe eines Benutzers.

Der Erfindung liegt daher die Aufgabe zugrunde, ein System zur Spracherkennung zu schaffen, bei dem eine Weitergabe von nicht korrekt erkannten Ziffern verhindert wird.

Die Erfindung wird durch ein System der eingangs genannten Art dadurch gelöst, daß bei wenigstens einer falsch erkannten Ziffer einer ersten Ziffernfolge die Steueranordnung zum Vergleich einer gesprochenen zweiten Ziffernfolge mit der ersten Ziffernfolge vorgesehen ist,
daß die Steueranordnung zur Ermittlung von zusammenhängenden Ziffern eines Teils der ersten Ziffernfolge, welche die meisten Übereinstimmungen mit den Ziffern der zweiten Ziffernfolge aufweist, dann vorgesehen ist, wenn die Anzahl der Ziffern der zweiten Ziffernfolge kleiner als die Anzahl der ersten Ziffernfolge ist, und
daß die Steueranordnung zur Ersetzung der Ziffern des ermittelten Teils der ersten Ziffernfolge durch die nicht übereinstimmenden Ziffern der zweiten Ziffernfolge vorgesehen ist.

Bei dem erfindungsgemäßen System wird eine Verifikation der Spracheingaben durch den Benutzer vorgenommen. Es werden hierbei gezielt die Ziffern korrigiert, die nicht verstanden worden sind. Die Spracherkennung kann nach den aus der Veröffentlichung "Hermann Ney, Volker Steinbiß, Xavier Aubert, Reinhold Haeb-Umbach: Progress in Large Vocabulary, Continuous Speech Recognition, in: H. Niemann, R. de Mori, G. Hanrieder: Progress and Prospects of Speech Research and Technology, 1994, Seiten 75 bis 92" bekannten Verfahren entnommen werden. Hierbei werden verbundene Ziffernketten mit Hilfe von Hidden-Markov-Modellen erkannt. Nachdem eine eingegebene Ziffernkette zu dem Zweck der Verifikation ausgegeben worden ist, hat der Benutzer die Möglichkeit die erkannte Ziffernfolge zu akzeptieren oder zurückzuweisen und anschließend bestimmte Ziffern nochmals einzugeben. Die Ausgabe der Ziffern erfolgt durch die Steueranordnung entweder durch Sprachsynthese oder durch Ausgabe voraufgezeichneter und gespeicherter Einzelziffern. Die Steueranordnung muß die Ziffern 0 bis 9 und bestimmte Steuereingaben, wie z.B. "ja", "nein" usw. verstehen.

Wenn eine erste Ziffernfolge erkannt worden ist, wird der Benutzer gefragt, ob diese korrekt verstanden worden ist. Ist dies nicht der Fall, wird der Benutzer aufgefordert eine neue Spracheingabe vorzunehmen. Hierbei kann er eine komplett neue Ziffernfolge oder auch nur eine Teilziffernfolge eingeben. Anschließend werden die erste Ziffernfolge und die neu eingegebene, zweite Ziffernfolge verglichen. Die Steueranordnung ermittelt dann einen Teil der ersten Ziffernfolge, welcher die meisten Ziffernübereinstimmungen mit den Ziffern der zweiten Ziffernfolge aufweist. Voraussetzung dabei ist, daß die Anzahl der Ziffern der zweiten Ziffernfolge kleiner als die Anzahl der ersten Ziffernfolge ist. Anschließend werden die Ziffern des Teils der ersten Ziffernfolge durch die nicht übereinstimmenden Ziffern der zweiten Ziffernfolge ersetzt.

Ein solches System kann beispielsweise Bestandteil eines Telefons sein, bei dem die Telefonnummer über die Spracheingabe erfolgt. Ferner kann das erfindungsgemäße System in einem Sprachmehrwertdienst (z.B. Sprachwahl im Netz) eingesetzt werden.

Das erfindungsgemäße System weist den Vorteil auf, daß nur solche Ziffern mit dem entsprechenden Kontext von dem Benutzer bei einer Korrektur eingegeben werden. Beispielsweise werden von dem Benutzer nur die Ziffer vor und nach einer falsch verstandenen Ziffer neu angesagt. Diese Form der Korrektur entspricht dem natürlichen, dem Benutzer gewohnten Vorgehen und ist auch schneller als das erneute Eingeben der gesamten Ziffernfolge. Außerdem ist die Erfolgsaussicht bei dieser Art der Korrektur größer, da durch die Eingabe einer Teilziffernfolge die Gefahr von Erkennungsfehlern geringer ist.

Die Steueranordnung bestimmt bei der Auswertung jeweils die Anzahl der Ziffern der ersten und zweiten Ziffernfolge und ermittelt, welche Ziffern aller zusammenhängenden Teile der ersten Ziffernfolge mit der zweiten Ziffernfolge übereinstimmen. Falls mehrere Teile bzw. Teilfolgen der ersten Ziffernfolge die gleiche Anzahl von Übereinstimmungen aufweisen, wird eine Teilfolge davon für die Korrektur ausgewählt. Hierbei kann die erste ermittelte Teilfolge mehrerer Teilfolgen mit einer übereinstimmenden Anzahl von Ziffern mit der zweiten Teilfolge ausgewählt werden.

Ferner ist die Steueranordnung zur Markierung wenigstens einer ersetzten Ziffer in der ersten Teilfolge durch eine Ziffer der zweiten Teilfolge und zur Ausgabe einer markierten Ziffer mit einer Betonung vorgesehen. Auch die anderen Ziffern werden mit einem bestimmten Akzent ausgesprochen. Die Steueranordnung gibt Ziffern an einer ungeraden Position der Ziffernfolge mit einem steigenden und Ziffern an einer geraden und an der letzten Position der Ziffernfolge mit fallenden Akzent aus. Durch diese Form der natürlichen Ausgabe mit paarweiser Prosodie wird ein besseres Aufnehmen der Ziffern ermöglicht. Die Ausgabe einer korrigierten Ziffer mit Betonung (kontrastiver Akzent) erlaubt eine einfachere Erfolgskontrolle.

Nach der Auswertung einer ersten und zweiten Ziffernfolge bildet die Steueranordnung mit der Ausgabe einer korrigierten ersten Ziffernfolge eine Frage an den Benutzer, ob die Ziffernfolge korrekt erkannt ist.

Die Erfindung bezieht sich auch auf ein Verfahren zur Spracherkennung von Ziffern, bei dem wenigstens eine Ziffernfolge erkannt wird und die erkannten Ziffern wenigstens einer Ziffernfolge ausgegeben werden. Hierbei ist vorgesehen,
daß bei wenigstens einer falsch erkannten Ziffer einer ersten Ziffernfolge eine gesprochene zweite Ziffernfolge mit der ersten Ziffernfolge verglichen wird,
daß zusammenhängende Ziffern eines Teils der ersten Ziffernfolge, welche die meisten Übereinstimmungen mit den Ziffern der zweiten Ziffernfolge aufweist, dann ermittelt werden, wenn die Anzahl der Ziffern der zweiten Ziffernfolge kleiner als die Anzahl der ersten Ziffernfolge ist, und
daß die Ziffern des ermittelten Teils der ersten Ziffernfolge durch die nicht übereinstimmenden Ziffern der zweiten Ziffernfolge ersetzt werden.

Ausführungsbeispiele der Erfindung werden nachstehend anhand der Figuren näher erläutert. Es zeigen:
- Fig. 1: ein System zur Spracherkennung und
- Fig. 2 bis 4: Ablaufdiagramme zur Erläuterung der Verfahren zur Spracherkennung.

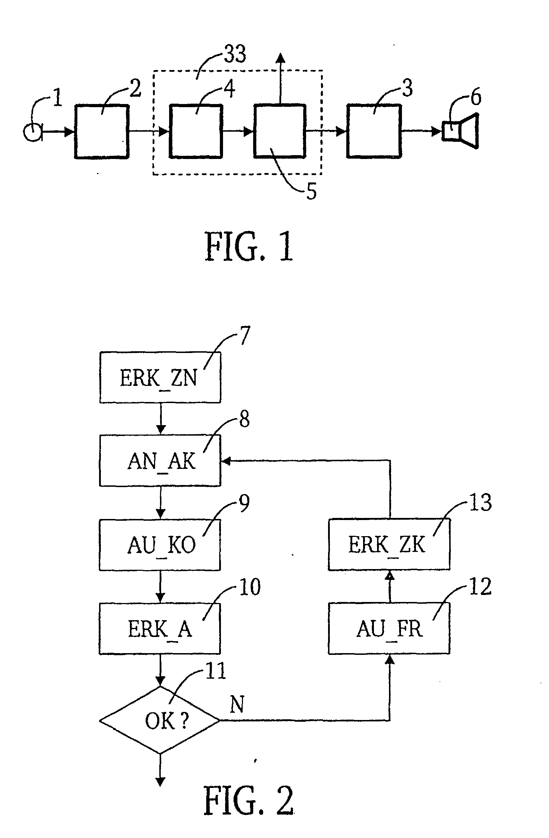

In Fig. 1 ist ein Ausführungsbeispiel eines Systems zur Spracherkennung von Ziffern dargestellt, welches ein Mikrofon 1, zwei Verstärker 2 und 3, eine Spracherkennungsanordnung 4, eine Auswerteschaltung 5 und einen Lautsprecher 6 enthält. Die Spracherkennungsanordnung 4 und die Auswerteschaltung 5 bilden eine Steueranordnung 33. Über das Mikrofon 1 werden Spracheingaben eines Benutzers eingegeben. Das System erhält spezielle Spracheingaben, nämlich bestimmte Ziffernfolgen (z.B. "3 8 7 4 2 1 6") und Steuereingaben, die über den Verstärker 2 zur Spracherkennungsanordnung 4 geliefert werden. Die Spracherkennungsanordnung 4 kann beispielsweise aus einem Signalprozessor mit entsprechenden Peripherieschaltungen bestehen, dessen im Betrieb laufendes Programm eine Spracherkennung ermöglicht. Solche Programme sind bekannt und die dem Programm zugrundeliegenden Verfahren können z.B. dem Dokument "Hermann Ney, Volker Steinbiß, Xavier Aubert, Reinhold Haeb-Umbach: Progress in Large Vocabulary, Continuous Speech Recognition, in: H. Niemann, R. De Mori, G. Hanrieder: Progress and Prospects of Speech Research and Technology, 1994, Seiten 75 bis 92" entnommen werden. Die vom Benutzer eingegebenen und erkannten Ziffernfolgen werden als Codeworte (z.B. im ASCII-Code) zur Auswerteschaltung 5 gegeben. In der Auswerteschaltung 5 ist eine Sprachausgabeanordnung enthalten, die aus den erkannten Ziffern wieder Sprachausgaben bildet. Hierbei kann die Sprachausgabeanordnung entweder aus einem Sprachsynthetisierer bestehen, der die synthetisierten Ziffern zum Verstärker 3 liefert, oder die Sprachausgabeanordnung entnimmt aus einem Speicher gespeicherte Sprachsegemente eines Sprechers, die ebenfalls dem Verstärker 3 zugeführt werden.

Die Sprachausgaben werden dann über den Lautsprecher 6 dem Benutzer zur Überprüfung angesagt. Hierbei werden von der Auswerteschaltung auch bestimmte Ansagen bzw. Phrasen ausgegeben, wie z.B.: "Ist die Ziffernfolge korrekt verstanden worden?". Der Benutzer kann anschließend bei einer falsch verstandenen Ziffer oder Ziffernfolge Korrekturen vornehmen.

Die Auswerteschaltung 5 enthält beispielsweise noch einen Mikroprozessor mit entsprechenden Peripherieschaltungen, welcher Softwaremodule zur Verarbeitung der erkannten Steuereingaben und Ziffern und zur Steuerung der Sprachausgabeanordnung aufweist. In Fig. 2 ist schematisch das Ablaufdiagramm des Hauptprozesses zur Erkennung von Ziffern dargestellt. Nachdem eine Ziffernfolge von der Spracherkennungsanordnung 4 empfangen worden ist, was durch die abkürzende Schreibweise ERK_ZN in einem Block 7 der Fig. 2 angedeutet ist, wird für die Sprachausgabe eine Analyse und Akzentmarkierung (AN_AK, Block 8) durchgeführt. Es werden dabei Ziffern einer Ziffernfolge mit einer ungeraden Position mit einem "b" und Ziffern der Ziffernfolge mit einer geraden Position mit einem "e" markiert. Die letzte Ziffer der Ziffernfolge wird unabhängig davon, ob es eine gerade oder ungerade Position der Ziffernfolge ist, mit einem "e" markiert. Das bedeutet, daß die Ziffer an der ersten, dritten, fünften Position usw. der Ziffernfolge mit einem "b" und die Ziffer an der zweiten, vierten, sechsten Position usw. der Ziffernfolge mit einem "e" gekennzeichnet werden. Hiermit wird für die Ausgabe eine paarweise Prosodie erzeugt. Beispielsweise wird die Ziffernfolge "3 8 7 4 2 1 6" folgendermaßen markiert: "3b 8e 7b 4e 2b 1e 6e".

Im Ablaufdiagramm nach Fig. 2 wird der nächste Schritt nach dem Block 8 durch einen Block 9 (AU_KO) angegeben. Dieser kennzeichnet die Ausgabe der erkannten Ziffernfolge und die Frage, ob die Ziffernfolge korrekt erkannt worden ist. Bei der Ausgabe der Ziffernfolge verwendet die Sprachausgabeanordnung der Auswerteschaltung 5 zwei Phrasenvarianten. Eine Ziffer wird entweder mit steigendem oder mit fallendem Akzent ausgegeben. Für die Ziffern, die mit "b" markiert sind, werden Phrasen mit steigendem Akzent verwendet und für die Ziffern, die mit "e" markiert sind, werden Phrasen mit fallendem Akzent verwendet. Hierdurch ergibt sich bei der Sprachausgabe ein paarweiser Prosodieverlauf, der dem natürlichen Sprechverhalten von Menschen entspricht.

Nachdem die Antwort des Benutzers auf die Frage des Systems erkannt worden ist (Block 10, ERK_A), wird in einem Abfrageblock 11 (OK ?) geprüft, wie die Antwort lautet. Hat der Benutzer mit "Ja" geantwortet, ist die Ziffernfolge erkannt und die Eingabe abgeschlossen. Die erkannte Ziffernfolge kann dann zur Weiterverarbeitung verwendet werden. Ist die Antwort "Nein", bittet das System den Benutzer um eine Korrektur, was durch die abkürzende Schreibweise AU_FR in einem Block 12 dargestellt ist. Der Benutzer kann daraufhin eine komplett neue Ziffernfolge oder eine Teilziffernfolge eingeben. Der sich anschließende Spracherkennungsprozeß und die Analyse der neu eingegebenen Ziffernfolge wird durch die abkürzende Schreibweise ERK_ZK in einem Block 13 angegeben. Nach der Spracherkennung und Analyse in Block 13 wird die schon oben beschriebene weitere Analyse und Akzentmarkierung (Block 8) durchgeführt.

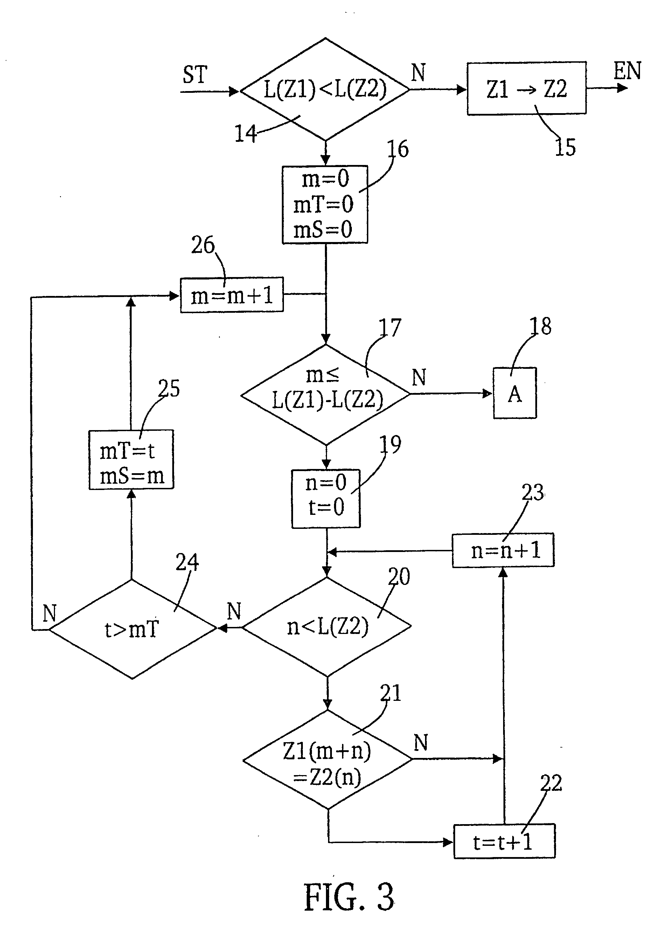

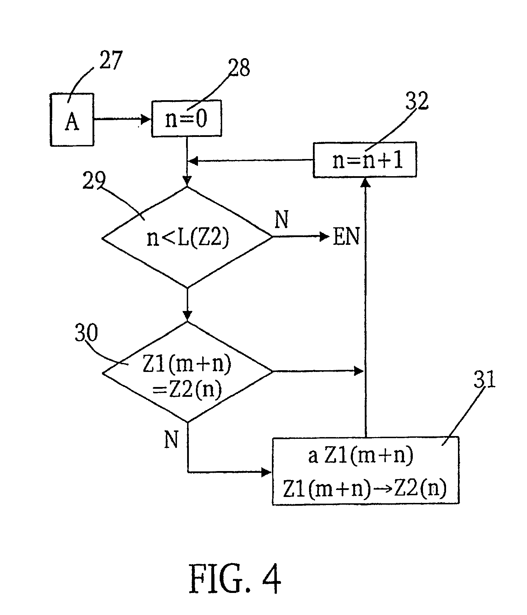

Die durch Block 13 angedeutete Analyse wird mit Hilfe der Ablaufdiagramme in den Fig. 3 und 4 näher erläutert. Der Analysebeginn in Fig. 3 ist durch ST gekennzeichnet. Zuerst wird geprüft, ob die Länge L(Z1) der alten Ziffernfolge Z1 kleiner als die Länge L(Z2) der neuen Ziffernfolge Z2 ist (Block 14: L(Z1) < L(Z2)). Ist dies nicht der Fall, wird die alte Ziffernfolge Z1 durch die neue Ziffernfolge Z2 ersetzt, was in einem Block 15 durch Z1 → Z2 angegeben wird. Hiermit endet dann die Analyse (EN). Ist die Ziffernfolge Z1 jedoch größer oder gleich der neuen Ziffernfolge Z2 werden, wie in einem Block 16 aufgeführt, die Variablen m, mT und mS gleich Null gesetzt (m = 0, mT = 0, mS = 0).

Es folgt die Beschreibung des Teils des Ablaufdiagramms, welcher herausfindet, welcher Teil der alten Ziffernfolge Z1 der neuen Ziffernfolge Z2 am ähnlichsten ist.

Hierbei wird am Anfang einer ersten Schleife zuerst geprüft (Block 17), ob die Ziffernfolge Z2 mit jedem Teil der Ziffernfolge von Z1 verglichen worden ist. Es wird in Block 17 also geprüft, ob der Wert der Variablen m kleiner oder gleich der Differenz der Länge der Zifferfolgen von Z1 und Z2 ist: m ≤ L(Z1) - L(Z2). Wenn beispielsweise die Ziffernfolge Z1 die Ziffern "3 8 7 4 2 1 6" und die Ziffernfolge Z2 die Ziffern "7 5 2" aufweist, ist die Länge der Ziffernfolge Z1 gleich 7 und die Länge der Ziffernfolge Z2 gleich 3. Somit muß die erste Schleife insgesamt fünfmal durchlaufen werden, da insgesamt fünf Teile der Ziffernfolge Z1 ("3 8 7", "8 7 4", "7 4 2", "4 2 1" und "2 1 6") mit der Ziffernfolge Z2 verglichen werden. Ergibt der Vergleich in Block 17, daß der Wert der Variablen m größer als die Differenz der Länge der Ziffernfolgen von Z1 und Z2 ist, ist die erste Schleife beendet und es wird zu einer zweiten Schleife übergegangen, deren Ablaufdiagramm in Fig. 4 gezeigt ist. Den Übergang zur zweiten Schleife gibt die Marke "A" (Block 18) an.

Ist der Vergleich m ≤ L(Z1) - L(Z2)) wahr, werden, wie in einem Block 19 gezeigt, zwei weitere Variablen n und t auf Null gesetzt. Die Variable n gibt jeweils die Position einer Ziffer in der Ziffernfolge Z2 und die Variable t die Anzahl der Übereinstimmungen von Ziffern zwischen dem zu vergleichenden Teil der Ziffernfolge Z1 und der Ziffernfolge Z2 an. Der nachfolgende Abfrageblock 20 ist ebenso wie die Blöcke 21, 22 und 23 Teil einer Unterschleife. Im Block 20 wird überprüft, ob der Wert der Variablen n kleiner als die Länge der Ziffernfolge Z2 ist. Ist dies der Fall wird im Abfrageblock 21 gefragt, ob die Ziffer an der Position m+n der Ziffernfolge Z1 gleich der Ziffer an der Position n der Ziffernfolge Z2 ist (Z1(m+n) = Z2(n)). Wird diese Abfrage bejaht, wird die Variable t inkrementiert (Block 22). Im negativen Fall wird ebenso wie nach der Bearbeitung von Block 22 zum Block 23 gesprungen. Der Block 23 gibt das Inkrementieren der Variablen n an. Anschließend wird die weitere Bearbeitung im Block 20 fortgesetzt.

Tritt der Fall ein, daß der Wert der Variablen n größer oder gleich der Länge der Ziffernfolge Z2 ist (Block 20), wird die weitere Bearbeitung bei einem Abfrageblock 24 fortgeführt. Hier wird geprüft, ob der Wert der Variablen t größer als der Wert der Variablen mT ist. Ist dies der Fall wird die Variable mT gleich t und die Variable mS gleich m gesetzt (Block 25). Die Variable mS gibt den Teil der Ziffernfolge Z1 an, welcher die meisten Ziffernübereinstimmungen mit der Ziffernfolge Z2 aufweist. Die Variable mT enthält hierfür die Anzahl der Übereinstimmungen. Im nächsten Schritt nach einem negativen Abfrageergebnis des Blockes 24 oder nach der Setzung der Variablen mT und mS in Block 25 wird die Variable m inkrementiert, wie in einem Block 26 gezeigt. Hiermit ist die erste Schleife beendet, in der ein Teil der Ziffernfolge Z1 ermittelt wird, der mit der Ziffernfolge Z2 am besten übereinstimmt. Bei dem oben genannten Beispiel ist der Teil mit den Ziffern "7 4 2" in der Ziffernfolge Z1 mit den Ziffern "3 8 7 4 2 16" der Ziffernfolge Z2 mit den Ziffern "7 5 2" am ähnlichsten.

Die zweite Schleife, die im Ablaufdiagramm der Fig. 4 dargestellt ist, markiert die Ziffern des Teils der Ziffernfolge Z1, die von den Ziffern der Ziffernfolge Z2 abweichen. Das Ablaufdiagramm gemäß Fig. 4 beginnt mit der Marke "A" in dem Block 27. Vor Beginn der zweiten Schleife wird die Variable n auf den Wert Null gesetzt, was ein Block 28 zeigt. Diese Variable n kennzeichnet die Position einer Ziffer in der Zeichenfolge Z2. Die zweite Schleife besteht aus den Abfrageblöcken 29 und 30 und weiteren Blöcken 31 und 32. Im Abfrageblock 29 wird geprüft, ob der Wert der Variablen n kleiner als die Länge der Ziffernfolge Z2 ist (n < L(Z2)). Ist dies nicht der Fall wird die Analyse beendet. Im anderen Fall wird geprüft, ob eine Ziffer des Teils der Ziffernfolge Z1 gleich der zugeordneten Ziffer der Ziffernfolge Z2 ist (Block 30). Der mathematische Ausdruck hierzu lautet: Z1(m+n) = Z2(n). Wenn die Ziffer an der Position m+n der Ziffernfolge Z1 mit der Ziffer an der Position n der Ziffernfolge Z2 übereinstimmt, wird als nächstes zum Block 32 gegangen. Im anderen Fall, bei Nichtübereinstimmung der Ziffern wird die Ziffer an der Position n+m der Ziffernfolge Z1 durch die Ziffer an der Position n der Ziffernfolge Z2 ersetzt. Dieser Fall wird in dem Block 31 durch den Ausdruck Z1(m+n) → Z2(n) gekennzeichnet. Zusätzlich wird die ersetzte Ziffer mit einem "a" gekennzeichnet. Diese Kennzeichnung wird im Block 31 durch den Ausdruck a Z1(m+n) angegeben. Im nächsten Schritt wird dann ein Inkrementieren der Variablen n durchgeführt, wie in Block 32 gezeigt. Die weitere Bearbeitung erfolgt dann wieder bei Abfrageblock 29.

Nachdem in Block 13 (Fig. 2) die Analyse durchgeführt worden ist, wird die neue Ziffernfolge Z1 an den Block 8 geliefert. Beispielsweise ist die neue Ziffernfolge Z1 mit den Ziffern "3 8 7 5 2 16" aus der alten Ziffernfolge Z1 mit den Ziffern "3 8 7 4 2 16" und der Ziffernfolge Z2 mit den Ziffern "7 5 2" gebildet worden. Hierbei ist die Ziffer "4" durch die Ziffer "5" ersetzt worden. Zusätzlich erhält der Block 8 von dem Block 13 die Markierung der ersetzten Ziffer oder Ziffern mit dem Buchstaben "a". In dem Block 8 wird dann, wie oben beschrieben, die Markierung der Ziffern mit den Buchstaben "b" und "e" durchgeführt. Für die markierte Ziffernfolge wird im Block 9 eine entsprechende Sprachausgabe erzeugt. Eine Ziffer, die mit "b" markiert ist, wird mit steigendem Akzent und eine Ziffer, die mit "e" markiert ist, wird mit fallendem Akzent ausgegeben. Eine Ziffer die mit dem Buchstaben "a" markiert ist, wird zusätzlich noch mit einer Betonung unterlegt, um dem Benutzer die vorgenommene Änderung anzugeben. Die Markierung der neuen Ziffernfolge Z1 lautet für das Beispiel folgendermaßen: "3b 8e 7b a5e 2b 1e 6e".

Die in der Fig. 2 im Ablaufdiagramm dargestellte Schleife aus den Blöcken 8 bis 13 wird solange durchlaufen, bis der Benutzer das Ergebnis akzeptiert.

Es sei noch erwähnt, daß die Steueranordnung 33 auch als Computersystem ausgebildet sein kann, welches die Funktionen der Spracherkennungsanordnung 4 und der Auswerteschaltung 5 ausführt.

## Patentansprüche

1. System zur Spracherkennung von Ziffern mit einer Steueranordnung (33) zur Erkennung von wenigstens einer gesprochenen Ziffernfolge und zur Ausgabe der erkannten Ziffern wenigstens einer Ziffernfolge,
**dadurch gekennzeichnet,**
**daß** bei wenigstens einer falsch erkannten Ziffer einer gesprochenen ersten Ziffernfolge die Steueranordnung (33) zum Vergleich einer gesprochenen zweiten Ziffernfolge mit der ersten Ziffernfolge vorgesehen ist,
**daß** die Steueranordnung (33) zur Ermittlung von zusammenhängenden Ziffern eines Teils der ersten Ziffernfolge, welche die meisten Übereinstimmungen mit den Ziffern der zweiten Ziffernfolge aufweist, dann vorgesehen ist, wenn die Anzahl der Ziffern der zweiten Ziffernfolge kleiner als die Anzahl der ersten Ziffernfolge ist, und
**daß** die Steueranordnung (33) zur Ersetzung der Ziffern des ermittelten Teils der ersten Ziffernfolge durch die nicht übereinstimmenden Ziffern der zweiten Ziffernfolge vorgesehen ist.

2. System nach Anspruch 1,
**dadurch gekennzeichnet,**
**daß** die Steueranordnung (33)
- jeweils zur Bestimmung der Anzahl der Ziffern der ersten und zweiten Ziffernfolge,
- zur Ermittlung der Übereinstimmung der Ziffern aller zusammenhängenden Teile der ersten Ziffernfolge mit der zweiten Ziffernfolge,
- zur Auswahl eines Teils der ersten Ziffernfolge mit den meisten Übereinstimmungen, falls mehrere Teile der ersten Ziffernfolge die gleiche Anzahl von übereinstimmenden Ziffern aufweisen, vorgesehen ist.

3. System nach Anspruch 1,
**dadurch gekennzeichnet,**
**daß** die Steueranordnung (33) zur Markierung wenigstens einer ersetzten Ziffer in der ersten Teilfolge durch eine Ziffer der zweiten Teilfolge und zur Ausgabe einer markierten Ziffer mit einer Betonung vorgesehen ist.

4. System nach Anspruch 1,
**dadurch gekennzeichnet,**
**daß** die Steueranordnung (33) nach der Auswertung einer ersten und zweiten Ziffernfolge zur Bildung einer Frage an den Benutzer mit der Ausgabe einer korrigierten ersten Ziffernfolge vorgesehen ist, ob die Ziffernfolge korrekt erkannt ist.

5. System nach Anspruch 1,
**dadurch gekennzeichnet,**
**daß** die Steueranordnung (33) zur Ausgabe der Ziffern an einer ungeraden Position der Ziffernfolge mit einem steigenden und Ziffern an einer geraden und an der letzten Position der Ziffernfolge mit fallenden Akzent vorgesehen ist.

6. Verfahren zur Spracherkennung von Ziffern, bei dem wenigstens eine gesprochene Ziffernfolge erkannt wird und die erkannten Ziffern wenigstens einer Ziffernfolge ausgegeben werden,
**dadurch gekennzeichnet,**
**daß** bei wenigstens einer falsch erkannten Ziffer einer gesprochenen ersten Ziffernfolge eine gesprochene zweite Ziffernfolge mit der ersten Ziffernfolge verglichen wird,
**daß** zusammenhängende Ziffern eines Teils der ersten Ziffernfolge, welche die meisten Übereinstimmungen mit den Ziffern der zweiten Ziffernfolge aufweist, dann ermittelt werden, wenn die Anzahl der Ziffern der zweiten Ziffernfolge kleiner als die Anzahl der ersten Ziffernfolge ist, und
**daß** die Ziffern des ermittelten Teils der ersten Ziffernfolge durch die nicht übereinstimmenden Ziffern der zweiten Ziffernfolge ersetzt werden.

## Claims

1. A speech recognition system for digits, comprising a control device (33) for recognizing at least one spoken digit sequence and for producing the recognized digits of at least one digit sequence, **characterized in that**, when there is at least one erroneously recognized digit of a spoken first digit sequence, the control device (33) is provided for comparing a spoken second digit sequence with the first digit sequence, **in that** the control device (33) is provided for determining correlating digits of a part of the first digit sequence which sequence has the most matches with the digits of the second digit sequence when the number of digits of the second digit sequence is smaller than the number of digits of the first digit sequence, and **in that** the control device (33) is provided for substituting the non-matching digits of the second digit sequence for the digits of the determined part of the first digit sequence.

2. A system as claimed in claim 1, **characterized in that** the control device (33) is used for
- determining the number of digits of the first and second digit sequence,
- determining the match of the digits of all the correlating parts of the first digit sequence with the second digit sequence,
- selecting a part of the first digit sequence having the most matches if more parts of the first digit sequence have the same number of matching digits.

3. A system as claimed in claim 1, **characterized in that** the control device (33) is used for marking at least a substituted digit in the first digit sequence by a digit of the second digit sequence and for producing a marked digit with a sound.

4. A system as claimed in claim 1, **characterized in that** when a corrected first digit sequence is produced and after the evaluation of a first and a second digit sequence, the control device (33) is used for forming a question to the user whether the digit sequence has been recognized correctly.

5. A system as claimed in claim 1, **characterized in that** the control device (33) is used for producing the digits on an odd position of the digit sequence with rising stress and digits on an even and on the last position of the digit sequence with falling stress.

6. A speech recognition method of digits in which at least one spoken digit sequence is recognized and the recognized digits of at least one digit sequence are produced, **characterized in that** in the event of at least one erroneously recognized digit of a spoken first digit sequence, a spoken second digit sequence is compared with the first digit sequence, **in that** correlating digits of a part of the first digit sequence which sequence has the most matches with the digits of the second digit sequence are determined when the number of digits of the second digit sequence is smaller than the number of the first digit sequence, and **in that** the digits of the determined part of the first digit sequence are replaced by the non-matching digits of the second digit sequence.

## Revendications

1. Système de reconnaissance de parole de chiffres avec un dispositif de commande (33) pour la reconnaissance d'au moins une séquence de chiffres prononcée et pour la sortie des chiffres reconnus d'au moins une séquence de chiffres, **caractérisé en ce que**, lorsqu'au moins un chiffre reconnu est erroné dans une première séquence de chiffres prononcée, le dispositif de commande (33) est prévu pour la comparaison d'une deuxième séquence de chiffres prononcée avec la première séquence de chiffres, que le dispositif de commande (33) est prévu pour la détermination de chiffres cohérents d'une partie de la première séquence de chiffres qui présente le plus de concordances avec les chiffres de la deuxième séquence de chiffres lorsque le nombre de chiffres de la deuxième séquence de chiffres est inférieur au nombre de la première séquence de chiffres et que le dispositif de commande (33) est prévu pour le remplacement des chiffres de la partie déterminée de la première séquence de chiffres par les chiffres non concordants de la deuxième séquence de chiffres.

2. Système selon la revendication 1, **caractérisé en ce que** le dispositif de commande (33) est respectivement prévu
- pour la détermination du nombre de chiffres des première et deuxième séquences de chiffres,
- pour la détermination de la concordance des chiffres de toutes les parties cohérentes de la première séquence de chiffres avec la deuxième séquence de chiffres,
- pour la sélection d'une partie de la première séquence de chiffres avec le plus de concordances si plusieurs parties de la première séquence de chiffres présentent le même nombre de chiffres concordants.

3. Système selon la revendication 1, **caractérisé en ce que** le dispositif de commande (33) est prévu pour le marquage d'au moins un chiffre remplacé dans la première séquence de chiffres par un chiffre de la deuxième séquence partielle et pour la sortie d'un chiffre marqué avec une accentuation.

4. Système selon la revendication 1, **caractérisé en ce que** le dispositif de commande (33) est prévu après l'évaluation de première et deuxième séquences de chiffres pour la formation, avec la sortie d'une première séquence de chiffres corrigée, d'une question à l'utilisateur pour savoir si la séquence de chiffres a été correctement reconnue.

5. Système selon la revendication 1, **caractérisé en ce que** le dispositif de commande (33) est prévu pour la sortie des chiffres en position impaire de la séquence de chiffres avec un accent montant et de chiffres en position paire et en dernière position de la séquence de chiffres avec un accent descendant.

6. Procédé de reconnaissance de parole de chiffres, au moins une séquence de chiffres prononcée étant reconnue et les chiffres reconnus d'au moins une séquence de chiffres étant sortis, **caractérisé en ce que** lorsqu'au moins un chiffre reconnu d'une première séquence de chiffre prononcée est erroné, une deuxième séquence de chiffres prononcée est comparée à la première séquence de chiffres,
que les chiffres cohérents d'une partie de la première séquence de chiffres qui présente le plus de concordances avec les chiffres de la deuxième séquence de chiffres sont déterminés lorsque le nombre de chiffres de la deuxième séquence de chiffres est inférieur au nombre de la première séquence de chiffres et
que les chiffres de la partie déterminée de la première séquence de chiffres sont remplacés par des chiffres non concordants de la deuxième séquence de chiffres.
